# EUROPÄISCHE PATENTANMELDUNG

(11) **EP 4 220 314 A1**
(43) Veröffentlichungstag der Anmeldung: **02.08.2023**
(21) Anmeldenummer: 22153406.8
(22) Anmeldetag: 26.01.2022
(51) Int. Cl.: G05B 19/042, G05B 19/05, G06Q 10/06

(54) **VERFAHREN UND ANORDNUNG ZUR KONFIGURIERUNG UND/ODER PROGRAMMIERUNG EINER INDUSTRIELLEN AUTOMATISIERUNGSKOMPONENTE**

(71) Anmelder: Siemens Aktiengesellschaft, 80333 München (DE)
(72) Erfinder: Kretschmer, Felix, 90451 Nürnberg (DE)
(74) Vertreter: Siemens Patent Attorneys

(57) **Zusammenfassung**

Die Erfindung betrifft ein Verfahren und eine Anordnung zur Konfigurierung und/oder Programmierung einer industriellen Automatisierungskomponente. Dabei werden für eine Vielzahl der möglichen Kombinationen (K1, K2, K3) aus der Hardware in jeweils unterschiedlicher Version und/oder dem Betriebssystem in jeweils unterschiedlicher Version und/oder dem Anwendungsprogramm in jeweils unterschiedlicher Version jeweils die Eigenschaften zur Laufzeit erfasst und in einer Datenbank (DB) gespeichert. Danach wird aus den Daten der Datenbank mittels eines Reinforcement-Lernens ein Modell für die Voraussage der Eigenschaften zur Laufzeit erstellt und/oder optimiert, wobei eine beim Lernen oder Optimieren des Modells verwendete Belohnungsfunktion des Reinforcement-Lernens auf eine akkurate Voraussage der Eigenschaften gerichtet ist. Danach werden für eine Anzahl beabsichtigter oder möglicher Kombinationen anhand des Modells die Eigenschaften zur Laufzeit vorausgesagt, wonach die Voraussagen mit einer vorgegebenen Anforderung verglichen werden. Schließlich wird anhand des Vergleichs eine geeignete Kombination ermittelt und die industrielle Automatisierungskomponente gemäß der ausgewählten Kombination konfiguriert oder programmiert. Somit lässt sich das Echtzeitverhalten sehr genau vorhersagen, so dass die Automatisierungskomponente optimal konfiguriert oder programmiert werden kann, insbesondere eine verfügbare Rechenleistung optimal ausgenutzt werden kann, ohne einerseits allzu große Reserven vorhalten zu müssen und andererseits die Verletzung von Echtzeitanforderungen zu riskieren.

## Beschreibung

Die Erfindung betrifft ein Verfahren zur Konfigurierung und/oder Programmierung einer industriellen Automatisierungskomponente gemäß dem Oberbegriff des Patentanspruchs 1, und eine Anordnung zur Konfigurierung und/oder Programmierung einer industriellen Automatisierungskomponente gemäß dem Oberbegriff des Patentanspruchs 7.

Innerhalb der Domäne von Echtzeit-Computing ist die Bestimmung von zyklischem Verhalten bei der Konfigurierung oder Programmierung essenziell. Dies betrifft insbesondere industrielle Automatisierungskomponenten wie beispielsweise speicherprogrammierbare Steuerungen, Bewegungssteuerungssysteme, Roboter und dergleichen. Die industriellen Automatisierungskomponenten sind regelmäßig mit Anwendungsprogrammen (kurz: Anwendungen) programmiert, die zyklisch ausgeführt werden. Die Zykluszeiten der jeweiligen Anwendung sind dabei regelmäßig fest vorgegeben, und es ist wichtig, dass die Ausführungszeit eines Zyklus des Anwendungsprogramms niemals länger dauert als die fest vorgegebene Zykluszeit.

In den Bereichen von Automatisierungstechnik bis zu Mobility werden für die dort eingesetzten Systeme hinsichtlich Jitter- und Zykluszeiten in Milli- bis zu Mikro-Sekundenbereichen benötigt; der Jitter gibt dabei eine Schwankung der Zykluszeiten an.

Um dieses Verhalten zu erreichen, ist ein tiefes Verständnis jedes beteiligten Moduls (Software und Hardware) sowie eine ganzheitliche Systembetrachtung notwendig (von Hardware-Revisionen, einfache Softwareschichten und Betriebssysteme/- prozesse bis zu Endnutzer-Applikationen bzw. Anwendungen). Dies bedeutet, dass sowohl Typ und Ausführung (Versionsstand) der eingesetzten Hardware-Plattform (kurz: Hardware), als auch der darauf betriebenen Software (Firmware, Betriebssystem, Anwendungsprogramm) entscheidenden Einfluss auf die Ausführungsdauer eines Zyklus des Anwendungsprogramms und damit auf die erreichbaren Zykluszeiten bzw. maximalen Jitter des Systems haben. Eine bestimmte Zykluszeit und ein bestimmter (maximaler) Jitter können also immer nur für eine spezifische Kombination aus Software und Hardware mit genau spezifizierten Ausgabeständen (Versionen) vorherbestimmt bzw. ausgetestet und somit garantiert werden. Sofern für eine bestimmte Kombination oder für zukünftige Versionen das Echtzeitverhalten nicht exakt vorhergesagt werden kann, müssen die Systeme, insbesondere die Hardware, derart großzügig dimensioniert werden, dass auch für die nicht getesteten Kombinationen das Echtzeitverhalten garantiert werden kann.

Paradigmen dieses Echtzeit-Computings findet man in speicherprogrammierbaren Steuerungen (SPS oder PLC genannt), Anwendungen zur Bewegungssteuerung ("Motion Control"), Lageregelungen, Lageregelungen, Automatisierungs- und (Tele-)Kommunikationslösungen und dgl. Die Zuverlässigkeit und das Systemverhalten sind der Schlüssel für einen stabilen Betrieb mit gewährleisteten Zyklus- und Jitterzeiten.

Durch den steigenden Trend von flexiblen Produktionssystemen und dem verstärkten Einsatz von IT-Technologien (Informationstechnik) in der OT (Operational Technology - Operationstechnik), müssen Lösungen für die Automatisierungstechnik zunehmend IT-Standards adaptieren und OT Lösungen auf Basis von IT-Technologien umsetzen. Folglich steigt auch die Notwendigkeit von flexiblen Systemen für Echtzeit-Computing sowie die hybride Nutzung von Nicht-Echtzeit- und Echtzeit-Applikationen auf einer Hardware (bspw. durch Container-Technologien wie im Industriellen Edge-Computing etc.). In diesem Kontext stellt auch die Möglichkeit zur Rekonfiguration eine entscheidende Rolle dar. Der Austausch von Applikationen sowie die regelmäßige Aktualisierung sind maßgebliche Design-Prinzipen aus der IT. Insbesondere in diesem Umfeld ist es wichtig, dass trotz der geforderten Flexibilität das Echtzeitverhalten weiterhin garantiert werden kann, insbesondere, dass die geforderten Zykluszeiten eingehalten werden und der auftretende Jitter, also die Schwankungsbreite bei der Ausführungsdauer der Zyklen des jeweiligen Anwendungsprogramms, innerhalb vorgegebener Grenzen verbleibt.

Insbesondere IT-getriebene Echtzeit-Lösungen werden heute mit einem iterativen Ansatz gelöst und zur Verfügung gestellt. Dabei bezeichnen IT-getriebene Lösungen solche, die sich insbesondere auf allgemeine Computersysteme und -netze stützen, beispielsweise Personal-Computer oder Industrie-PCs und Rechnernetze, die das Internet Protocol (IP) nutzen - im Gegensatz zu proprietären Automatisierungskomponenten wie Speicherprogrammierbare Steuerungen (SPS) und Automatisierungsnetze wie ProfiNET und dergleichen.

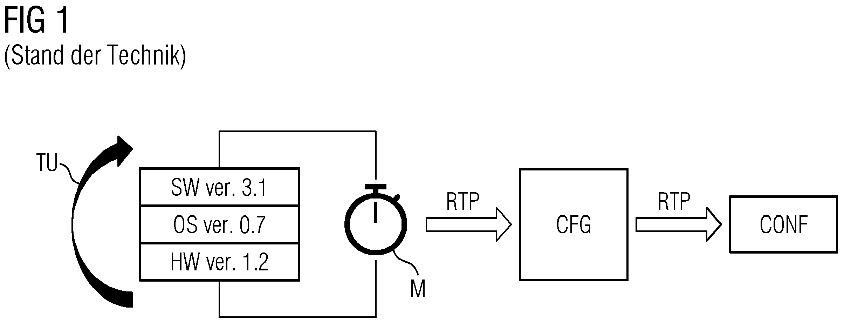

Bei dem iterativen Ansatz werden sämtliche Schichten von Hardware bis Enduser-Software in jeweils einer genau spezifizierten Version berücksichtigt und die gesamte Kette betrachtet und gemessen (also im Betrieb betrachtet). Dies ist in der Figur 1 dargestellt.

Das Echtzeit-Verhalten wird dabei in den wesentlichen Faktoren Zykluszeit und Jitter gemessen und berücksichtigt. Der Messung steht meist eine Vorgabe/Anforderung durch einen konkreten Use Case gegenüber, welcher bestimmte Ergebnisse in den Zeiten erfordert, also insbesondere eine bestimmte Zykluszeit und einen maximal tolerierten Jitter vorgibt. Durch Iterationen werden pro Durchlauf verschiedene Faktoren geprüft und identifiziert, welche über Parameter eingestellt werden können, die in den verschiedenen Durchläufen also variiert werden. Beispielsweise kann dasselbe Betriebssystem in verschiedenen Versionen getestet werden oder dieselbe Hardware mit unterschiedlichen Prozessor-Taktraten.

Somit wird durch jede Iteration das Echtzeit-Verhalten optimiert, bis die Zielvorgabe erreicht ist, oder die Möglichkeiten der Optimierung erschöpft sind. Letzteres führt dann zu einem erneuten Start des Vorgangs mit veränderten Ausgangsparametern (andere Hardware, anderes Betriebssystem, etc.). Nach Erreichen der notwendigen Werte wird die vorliegende Konfiguration inkl. eingestellter Parameter gespeichert und für reproduzierbares Anwenden als Vorlage verwendet.

Durch den iterativen Ansatz pro Anwendungsfall ist das Vorgehen zeitintensiv und benötigt eine individuelle Betrachtung jedes Anwendungsfalls. Durch die Anzahl der möglichen Permutationen aus Hardware und Software und durch die zahlreichen veränderbaren Parameter ist es aber nicht möglich, alle möglichen Konstellationen durchzutesten. Eine flexible Aussage (ad-hoc) zum Echtzeit-Verhalten (bspw. ändernde Software, Updates, bereits bestehende Systeme) ist nicht umfänglich möglich.

Es ist also eine Aufgabe der erfindungsgemäßen Lösung, auch aus einem begrenzten Testspektrum eine möglichst akkurate Vorhersage des Echtzeit-Verhaltens einer Kombination aus Hardware und Software für eine industrielle Automatisierungskomponente bei der Ausführung eines industriellen Anwendungsprogramms zu treffen und damit die Konfigurierung und/oder Programmierung der industriellen Automatisierungskomponente zu verbessern.

Die Aufgabe wird durch das erfindungsgemäße Verfahren nach Patentanspruch 1 und durch die erfindungsgemäße Anordnung gemäß Patentanspruch 7 gelöst.

Dabei wird ein Verfahren zur Konfigurierung und/oder Programmierung einer industriellen Automatisierungskomponente, insbesondere einer industriellen Steuerung oder einer industriellen Kommunikationseinrichtung, vorgeschlagen, wobei bezüglich der Automatisierungskomponente zumindest eine spezifische Anforderung hinsichtlich der Eigenschaften zur Laufzeit, insbesondere hinsichtlich eines Echtzeit-Verhaltens bei der Ausführung eines industriellen Anwendungsprogramms, vorgegeben wird, und wobei für die industrielle Automatisierungskomponente regelmäßig verschiedene mögliche Kombinationen aus verschiedenen Versionen einer Hardware, eines Betriebssystems und/oder des Anwendungsprogramms verfügbar sind. Dabei werden in einem ersten Schritt für eine Vielzahl der möglichen Kombinationen aus der Hardware in jeweils unterschiedlicher Version und/oder dem Betriebssystem in jeweils unterschiedlicher Version und/oder dem Anwendungsprogramm in jeweils unterschiedlicher Version jeweils die Eigenschaften zur Laufzeit erfasst und in einer Datenbank gespeichert, in einem zweiten Schritt wird aus den Daten der Datenbank mittels eines Reinforcement-Lernens ein Modell für die Voraussage der Eigenschaften zur Laufzeit erstellt und/oder optimiert, wobei eine beim Lernen oder Optimieren des Modells verwendete Belohnungsfunktion des Reinforcement-Lernens auf eine akkurate Voraussage der Eigenschaften gerichtet ist, in einem dritten Schritt werden für eine Anzahl beabsichtigter oder möglicher Kombinationen anhand des Modells die Eigenschaften zur Laufzeit vorausgesagt, in einem vierten Schritt werden die Voraussagen mit der zumindest einen vorgegebenen Anforderung verglichen, und in einem fünften Schritt wird schließlich anhand des Vergleichs eine geeignete Kombination ermittelt und die industrielle Automatisierungskomponente gemäß der ausgewählten Kombination konfiguriert oder programmiert. Somit lässt sich das Echtzeitverhalten sehr genau vorhersagen, so dass die Automatisierungskomponente optimal konfiguriert oder programmiert werden kann, insbesondere eine verfügbare Rechenleistung optimal ausgenutzt werden kann, ohne einerseits allzu große Reserven vorhalten zu müssen und andererseits die Verletzung von Echtzeitanforderungen zu riskieren.

Die Aufgabe wird außerdem durch eine Anordnung zur Konfigurierung und/oder Programmierung einer industriellen Automatisierungskomponente, insbesondere einer industriellen Steuerung oder einer industriellen Kommunikationseinrichtung, gelöst, wobei bezüglich der Automatisierungskomponente zumindest eine spezifische Anforderung hinsichtlich der Eigenschaften zur Laufzeit, insbesondere hinsichtlich eines Echtzeit-Verhaltens bei der Ausführung eines industriellen Anwendungsprogramms, vorgegeben ist, und wobei für die industrielle Automatisierungskomponente regelmäßig verschiedene mögliche Kombinationen aus verschiedenen Versionen einer Hardware, eines Betriebssystems und/oder des Anwendungsprogramms verfügbar sind. Dabei ist zumindest eine Testanordnung vorgesehen und dazu eingerichtet, dass für eine Vielzahl der möglichen Kombinationen aus der Hardware in jeweils unterschiedlicher Version und/oder dem Betriebssystem in jeweils unterschiedlicher Version und/oder dem Anwendungsprogramm in jeweils unterschiedlicher Version jeweils die Eigenschaften zur Laufzeit erfasst und in einer Datenbank gespeichert werden. Eine Analyseeinrichtung ist vorgesehen und dazu eingerichtet, aus den Daten der Datenbank mittels eines Reinforcement-Lernens ein Modell für die Voraussage der Eigenschaften zur Laufzeit zu erstellen und/oder zu optimieren, wobei eine beim Lernen oder Optimieren des Modells verwendete Belohnungsfunktion des Reinforcement-Lernens auf eine akkurate Voraussage der Eigenschaften gerichtet ist. Ferner ist eine Auswahleinrichtung vorgesehen zur Voraussage der Eigenschaften zur Laufzeit für eine Anzahl beabsichtigter oder möglicher Kombinationen anhand des Modells, wobei die Auswahleinrichtung zum Vergleich der Voraussagen mit der zumindest einer vorgegebenen Anforderung eingerichtet ist, und wobei die Auswahleinrichtung zur Ermittlung einer geeigneten Kombination anhand des Vergleichs und zur Übertragung von Informationen über die ermittelte Kombination zu einem Engineeringsystem - also einer Einrichtung zur Konfigurierung und Programmierung von Automatisierungskomponenten - eingerichtet ist. Weiter umfasst die Anordnung vorzugsweise eben dieses Engineeringsystem, wobei die Konfigurierung oder Programmierung der industriellen Automatisierungskomponente gemäß der ausgewählten Kombination mittels des Engineeringsystems vorgesehen ist. Mit dieser Anordnung lassen sich die anhand des Verfahrens beschriebenen Vorteile erzielen; gleiches gilt für ein entsprechendes Computerprogrammprodukt mit einem Computerprogramm, welches bei der Ausführung auf einem Computer das erfindungsgemäße Verfahren oder zumindest wesentliche Anteile davon ausführt.

Vorteilhafte Ausgestaltungen der Erfindung sind in den abhängigen Patentansprüchen angegeben, deren Merkmale und Vorteile sowohl einzeln als auch in sinnfälliger Kombination realisiert werden können.

Vorteilhaft erfolgt in dem fünften Schritt im Falle mehrerer ermittelter geeigneter Kombinationen eine Auswahl aus diesen Kombinationen anhand eines weiteren Kriteriums. Dies kann ein weiteres technisches Kriterium sein, beispielsweise eine Energie-Effizienz. Dies kann aber auch ein wirtschaftliches Kriterium sein, beispielsweise Hardware-Kosten oder Lieferzeiten. Die dafür benötigten Informationen, zum Beispiel Leistungsaufnahme oder Preise, werden vorteilhaft automatisch aus online verfügbaren Quellen, beispielsweise Datenblättern oder Katalogen von Lieferanten, abgerufen und ausgewertet. Vorteilhaft ist also das weitere Kriterium eine Kosteninformation und/oder eine Verfügbarkeitsinformation zum Zeitpunkt einer geplanten Konfigurierung oder Programmierung, wobei die Preisinformationen und/oder Verfügbarkeitsinformationen automatisch beispielsweise aus zumindest einem Warenwirtschaftssystem abgerufen werden.

In einer besonders vorteilhaften Variante werden in dem ersten Schritt in einer Testanordnung eine Vielzahl von Kombinationen automatisch installiert und ausgeführt. Dazu ist es möglich, die verschiedenen Komponenten (Hardware, Firmware, Betriebssystem, Anwendungsprogramme) in verschiedene Kategorien wie zum Beispiel "basic", "medium", "pro", "consumer", "industrial grade" für die Leistung oder Funktionalität oder Zuverlässigkeit einzustufen und bei den automatischen Tests bevorzugt Komponenten derselben Kategorie miteinander zu kombinieren, um die Anzahl der zu testenden Kombinationen zu begrenzen.

In einer Variante wirkt in dem ersten Schritt die Kombinationen mit zumindest einer anderen (vorzugsweise simulierten) Automatisierungskomponenten zusammen, wobei durch diese (ggf. simulierte) Automatisierungskomponente ein geplanter Anwendungsfall für die zu konfigurierende oder zu programmierende Automationskomponente simuliert wird, und wobei für jeden Anwendungsfall oder zumindest für jede Klasse an Anwendungsfällen die Eigenschaften zur Laufzeit separat in der Datenbank gespeichert und in dem Modell separat gelernt wird. Damit wird zum Einen ein realistischer Test ermöglicht, indem das zu testende System mit einer realistischen simulierten "Last" zusammenwirkt und nicht nur im Leerlauf ("idle mode") operiert. Zum anderen kann dieselbe Anwendungssoftware für verschiedene Zwecke eingesetzt werden, wobei jeder Anwendungsfall zu einem unterschiedlichen Laufzeitverhalten führen kann. Deswegen ist es sinnvoll, das Laufzeitverhalten für unterschiedliche Anwendungsfälle oder Klassen von Anwendungsfällen separat zu erfassen und auszuwerten und später vorauszusagen. In diesem Zusammenhang können die Anwendungsfälle auch durch Meta-Informationen charakterisiert werden, die zusammen mit den bei den Tests generierten Daten in der Wissensbasis, also der Datenbank, gespeichert bzw. mit-trainiert werden, und wobei Meta-Information desselben Datentyps bei einer Abfrage zur Vorhersage an die Analyseeinrichtung übermittelt werden. Im einfachsten Fall umfasst die Meta-Information technische Randparameter, beispielsweise bei Systemen zur Bewegungsteuerung die Anzahl der eingesetzten Achsen, deren maximale Verfahr-Geschwindigkeit und die Abfragefrequenz der eingesetzten Bewegungs-Encoder. Es werden also vorteilhaft in dem ersten Schritt für einen Anwendungsfall jeweils beschreibende Meta-Informationen in der Datenbank hinterlegt, wobei in dem dritten Schritt zur Voraussage der Eigenschaften zur Laufzeit beschreibende Meta-Informationen für einen beabsichtigten Anwendungsfall vorgegeben werden.

Ein Ausführungsbeispiel des erfindungsgemäßen Verfahrens wird nachfolgend anhand der Zeichnungen erläutert; dies dient gleichzeitig der Erläuterung einer erfindungsgemäßen Anordnung.

Dabei zeigen:
- Figur 1: in schematischer Darstellung ein Verfahren aus dem Stand der Technik, und
- Figur 2: in schematischer Darstellung ein erfindungsgemäßes Verfahren.

Die Figur 1 zeigt schematisch ein Verfahren aus dem Stand der Technik zur Konfigurierung einer (nicht dargestellten) industriellen Automatisierungskomponente. Hierbei sind auf der linken Seite der Figur die verschiedenen Schichten der Automatisierungskomponente gezeigt, nämlich exemplarisch die Hardware HW, das Betriebssystem OS und die Software bzw. das Anwendungsprogramm SW. Jede dieser Schichten ist mit einer eindeutigen Versionsbezeichnung (ver.) 1.2, 0.7, 3.1 gekennzeichnet. Diese Kombination aus genau spezifizierten Versionen wird in einer Testumgebung oder Testanordnung zur Ausführung gebracht - die Testanordnung kann ggf. auch ein real eingesetztes Automatisierungssystem sein -, wobei durch eine Messung M Eigenschaften zur Laufzeit RTP (runtime properties) erfasst werden, beispielsweise die erforderte Zykluszeit beim einmaligen Durchlauf des Hauptzyklus des Anwendungsprogramms SW als Mittelwert über eine Anzahl von Ausführungen und der Jitter als Varianz der gemessenen Ausführungszeit bei den verschiedenen Ausführungen der Zyklen. Die verschiedenen Ausführungen oder Iterationen bieten die Möglichkeit zu einer Optimierung TU (tuning), wobei verschiedene Parameter variiert werden können. Das können Taktfrequenzen für eine Kommunikation oder einen Prozessor, Bildschirmauflösungen oder andere Einstellungen sein. Bei den Iterationen variiert beispielsweise die Ausführungszeit (Zykluszeit) oder andere Eigenschaften zur Laufzeit (RTP - runtime properties), wobei ein Datensatz bestehend aus den Versionsnummern der verschiedenen Schichten der verwendeten Kombination aus Hardware und Software zusammen mit den bei den Optimierungsschritten am besten geeigneten Parametereinstellungen in einer Konfigurierungsdatenbank CFG (configuration) gespeichert werden. Die genannten Optimierungsschritte zur Anpassung der Parameter können in manchen Fällen nicht ausreichen, um Zielvorgaben für die Eigenschaften zur Laufzeit zu erfüllen. In diesem Fall kann beispielsweise eine Hardware in einer verbesserten Version eingesetzt werden und/oder ein anderes Betriebssystem oder eine andere Version des Anwendungsprogramms. Dann beginnt dieser Vorgang des Optimierens von vorne, bis die Vorgaben erreicht sind. Ein entsprechender Datensatz aus den Versionsbezeichnungen und den am besten geeigneten Parametern wird dann wiederum in die Konfigurierungsdatenbank CFG eingespeichert. Zur Konfigurierung CONF der Automatisierungskomponente wird dann aus der Konfigurierungsdatenbank CFG eine geeignete Kombination und die dabei aufgefundenen (optimierten) Parameter ausgewählt und auf die Automatisierungskomponente angewendet, d. h., dass die einzusetzende Automatisierungskomponente entsprechend konfiguriert und programmiert wird.

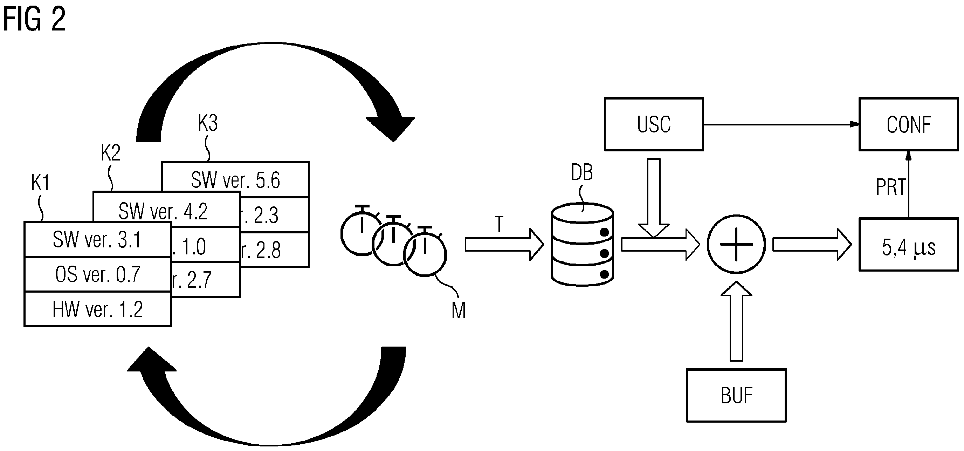

In der Figur 2 ist darauf aufbauend das erfindungsgemäße Verfahren dargestellt. In einer Testanordnung, einer sogenannten Testfarm, werden verschiedene Kombinationen K1, K2, K3 bestehend jeweils aus einer Hardware-Plattform in einer spezifizierten Version 1.2, 2 7, 2.8 in Kombination mit verschiedenen Versionen eines Betriebssystems OS 0.7, 1.0, 2.3 und eines Anwendungsprogramms SW in verschiedenen Versionen 3.1, 4.2, 5.6 jeweils miteinander kombiniert und zur Ausführung gebracht. Im vorliegenden Ausführungsbeispiel sind in der ersten Kombination K1 jeweils frühere und somit "schwächere" Versionen der Hardware, des Betriebssystems und des Anwendungsprogramms miteinander kombiniert und in den anderen Kombination K2, K3 jeweils neuere bzw. leistungsfähigere, sodass sich drei Kombinationen K1, K2, K3 in verschiedener Leistungsstärke ergeben, die jedoch auch unterschiedliche Aufwände, insbesondere bezüglich der Hardware- und der Software-Kosten, verlangen. Alle drei Kombinationen K1, K2, K3 werden jeweils mit einer Anzahl von Messungen M hinsichtlich ihrer Laufzeit-Eigenschaften erfasst. Wie bereits an der Figur 1 erläutert, können hier auch jeweils Optimierungsschritte zur Ermittlung der bestgeeigneten Parameter angewendet werden; diese Optimierungsschritte sind in der Figur 2 jedoch nicht dargestellt.

In der Figur 2 ebenfalls nicht dargestellt ist die detaillierte Testanordnung, die auch die weitere Umgebung für die zu testenden Kombinationen bereitstellen kann, insbesondere im Wege einer Simulation. Ebenso nicht dargestellt ist die Möglichkeit, anstelle tatsächlicher unterschiedlicher Hardware-Versionen 1.2, 2.7, 2.8 jeweils entsprechend konfigurierte virtuelle Maschinen auf einer leistungsfähigen Basis-Hardware bereitzustellen, wodurch der Aufwand der für die Testanordnung bzw. "Testfarm" bereitzustellende Hardware drastisch verringert werden kann.

Aus den Informationen (vor allem: Versionsbezeichnungen) der jeweiligen Kombinationen K1, K2, K3 und den jeweils zugeordneten Ergebnissen der Messungen M wird ein (nicht dargestelltes) Modell - eine künstliche Intelligenz, z.B. ein neuronales Netz- erstellt, trainiert bzw. nach-trainiert, welches der Bestimmung bzw. Vorhersage der Laufzeit-Eigenschaften einer industriellen Automatisierungskomponente dient, die entsprechende Komponenten ähnlich der Kombinationen K1, K2, K3 aufweist. Dabei wird für das Training T einer zur Modellierung verwendeten künstlichen Intelligenz ein sogenanntes Reinforcement-Learning (verstärkendes Lernen) verwendet, wobei bei jeder Ausführung einer der Kombinationen K1, K2, K3 die Abweichung zwischen den tatsächlich gemessenen Eigenschaften zur Laufzeit mit den von dem Modell für die jeweilige Kombination K1, K2, K3 kalkulierten Laufzeit-Eigenschaften jeweils ermittelt wird, wobei der Algorithmus bei einer sehr geringen Abweichung stärker belohnt wird und somit das Modell sukzessive verfeinert wird. Das Modell und die beim Training T des Modells verwendeten Kombinationen K1, K2, K3 und ggf. die dabei verwendeten Parameter werden zusammen mit den Ergebnissen der Messungen M und dem damit trainierten Modell in einer Datenbank DB, der sogenannten Wissensbasis, gespeichert.

Zur Ermittlung der voraussichtlichen Eigenschaften zur Laufzeit PRT (predicted runtime properties) einer gewünschten Kombination USC (user-specific configuration) wird ein Datensatz mit der Konfiguration dieser Kombination, also im Wesentlichen mit den Versionsbezeichnungen und anderen Identifikationsinformationen für die Hardware, das Betriebssystem, das Anwendungsprogramm und gegebenenfalls auch der Firmware und dergleichen, zu einer Analyseeinrichtung übertragen, die das in der Datenbank DB gespeicherte Modell mit diesen Informationen konfrontiert und als Rückgabewert Informationen über die zu erwartenden Eigenschaften zur Laufzeit für diese Konfiguration OSC zurückliefert; außerdem können ggf. die bei einer Optimierung ermittelten Parameter zurückgeliefert werden. Die Vorgaben an die Analyseeinrichtung können auch Meta-Informationen über den geplanten Einsatz der Automatisierungskomponente umfassen, die dann durch das trainierte Modell mit Meta-Informationen der bei den Tests durchgeführten (simulierten) Anwendungsfällen korreliert werden. Dies erhöht die Genauigkeit der Voraussage.

Die Analyseeinrichtung und die Datenbank DB können dabei auf einem gemeinsamen Server eingerichtet sein, es kann sich jedoch auch um eine getrennte Anordnung handeln.

Das zurückgelieferte Ergebnis wird durch die Addition eines Sicherheitspuffers BUF (buffer of uncertainty) mit einem Zuschlag für unkalkulierbare Abweichungen beaufschlagt. Dieser Wert BUF kann jedoch wegen der im Vergleich zum Stand der Technik zuverlässigeren bzw. präziseren Antwort des Modells oft kleiner ausfallen als bei dem iterativen Verfahren (siehe Figur 1).

Das Ergebnis ist eine Voraussage über die zu erwartenden Eigenschaften zur Laufzeit PRT (prediction for runtime). Eine Auswahleinrichtung (nicht dargestellt) vergleicht diesen Wert PRT mit Vorgaben für eine anstehende Aufgabe der zu konfigurierenden oder programmierenden Automatisierungskomponente. Diese Vorgaben können insbesondere aus einer maximalen Zykluszeit und einem maximalen Jitter bestehen. Diese Vorgaben haben zumeist einen technischen Hintergrund, beispielsweise wegen der geforderten Stabilität eines Regelalgorithmus, geforderten Reaktionszeiten oder dergleichen. Sofern die Vorgaben erfüllt sind, kann die Automatisierungskomponente gemäß der geprüften Kombination USC konfiguriert bzw. programmiert werden, vorzugsweise mittels eines Engineering-Systems. Bei einer substantiellen Über-Erfüllung der Vorgaben kann erwogen werden, eine kleinere und damit meist kostengünstigere Hardware HW oder eine weniger leistungsfähige Software-Kombinationen aus Betriebssystem, Anwendungsprogramm und gegebenenfalls Firmware einzusetzen. Eine solche alternative Kombination kann automatisch ausgewählt und dann mittels der Analyseeinrichtung geprüft werden. Falls die geprüfte Kombination USC die Vorgaben nicht erfüllt, kann umgekehrt eine andere alternative Kombination automatisch vorgeschlagen und geprüft werden, wobei diese alternative Kombination Fall aus höherwertigen und damit in der Regel "schnelleren" Komponenten bestehen kann. In einer Ausführungsform kann die Analyseeinrichtung auch mit den Vorgaben konfrontiert werden und dann eine oder mehrere der getesteten Kombinationen K1, K2 oder K3 zurückliefern, die hinsichtlich ihres Verhaltens zur Laufzeit den Vorgaben am nächsten kommen und diese erfüllen. An diesen tatsächlich getesteten Kombinationen K1, K2, K3 kann sich das System dann zur Generierung einer neuen, noch nicht getesteten Kombination USC orientieren, womit sich die Anzahl der Iterationen zur Auffindung der bestgeeigneten Kombination gegebenenfalls reduzieren lässt.

Der erfindungsgemäße Ansatz löst das Problem des Auffindens einer bestgeeigneten Kombination aus Software und/oder Hardware für eine Automatisierungskomponente durch den Aufbau und die Nutzung einer Wissensbasis für die Vorhersage von Echtzeitverhalten.

Hierzu wird nicht - wie bisher - der iterative Ansatz zum "Tunen" (schrittweisen Verbessern) einer spezifischen Konfiguration oder eines spezifischen Systems genutzt, sondern eine Vielzahl an Variationen von Hardware bis Endnutzer-Anwendung und mögliche Kombinationen hiervon werden gemessen und somit auf ihr Echtzeit-Verhalten getestet. Die Ergebnisse dieser Messungen werden in einer globalen Wissensbasis (z.B. ein Zusammenschluss verschiedener Datenbanken etc.) gespeichert.

Liegt nun eine spezifische Konfiguration oder ein System vor, für welches eine Aussage zum Echtzeitverhalten getroffen werden muss, so gibt es zwei Möglichkeiten der Vorhersage.

Im einfachsten Fall ist exakt die vorliegende Konfiguration bereits bekannt und es liegen Messungen für exakt diese Konfiguration vor. Eine Vorhersage ist hier direkt möglich. Allerdings tritt wegen der Vielzahl der möglichen Kombinationen dieser Idealfall nur selten ein.

Falls die betrachtete Kombination jedoch noch nicht getestet bzw. "gemessen" wurde, muss für die vorliegende Konfiguration eine Ableitung getroffen werden. Diese Ableitung erfolgt anhand vorliegender Ergebnisse vergleichbarer Systeme sowie einen zusätzlichen Unsicherheits-Faktor, der Ungenauigkeiten der Ableitung berücksichtigt. Durch dieses Vorgehen lässt sich eine Vorhersage zum Echtzeit-Verhalten insbesondere bei flexiblen Systemen (bspw. Container-Umgebung wie Industriellem Edge-Computing ("Industrial Edge"), oder Virtualisierungs-Umgebungen mit flexiblen Instanzen und regelmäßig wechselnden Anwendungen) treffen.

Die Nachteile dieses Ansatzes - insbesondere durch den vergleichsweise großen Unsicherheits-Faktor - liegen in den "verschenkten" Werten im Echtzeitverhalten. Der Ansatz bietet daher kaum eine Möglichkeit, ein System bis zum letztmöglichen Wert hinsichtlich Echtzeit zu optimieren, bietet andererseits jedoch aufwandsarme Vorhersagen für hoch-flexible Umgebungen. Das Vorgehen bringt dabei prinzipbedingt eine hohe Anzahl an Kombinationen mit sich, die aufgebaut und getestet werden müssen. Um hier eine Einschränkung zu machen oder die Vorhersage zumindest für bestimmte Gruppen zu verbessern, lässt sich eine Reduktion in erfasster/unterstützter Hardware aufnehmen (bspw. nur Industrial-Grade Hardware erfassen und Vorhersagen dafür treffen). Es ist auch möglich, nur solche Systemkomponenten (Hardware, Software) zusammenzustellen, die gerade lieferbar sind, die bestimmten Preisvorstellungen genügen oder aus anderen - auch technischen - Gründen (z.B. die Erfüllung von Sicherheitsvorgaben oder dgl.) bevorzugt werden sollen. Die Zusammenstellungen können auch automatisch durch Zugriff auf Warenwirtschaftssysteme oder Lieferanten-Datenbanken gebildet und automatisch getestet werden.

Die Qualität der Vorhersage lässt sich des Weiteren durch zwei Optionen deutlich verbessern.

Zum einen ist der Einsatz dedizierter Test-Farmen möglich, mit denen der bereits erwähnte teil- oder vollautomatische Test verschiedener Kombinationen bewerkstelligt werden kann. Durch die Bereitstellung dedizierter Ressourcen (unterschiedliche Systeme + Kombination an Software und Anwendungen) können separate Test-Messungen durchgeführt und in die Wissensbasis gespeichert werden. Mit steigender Größe (Anzahl) an Systemen in der Test-Farm verbessert sich auch das Wissen / die Erfahrung zum Echtzeit-Verhalten und führt somit zu einem verbesserten Modell und somit einer verbesserten Qualität der Vorhersage für Nutzer-spezifische Systeme.

Zum anderen ermöglicht der erfindungsgemäße Einsatz von Reinforcement-Learning eine wesentliche Verbesserung der Vorhersage-Genauigkeit. Diese Methode des maschinellen Lernens ermöglicht gezielt Vorhersagen mit gutem Echtzeitverhalten zu erreichen. Hierfür wird ein Algorithmus belohnt und somit beim Lernen verstärkt bzw. optimiert, der beim Erreichen besonders guten Echtzeit-Verhaltens durch bestimmte Kombinationen in Systemen oder dem optimierten Parametrieren von Systemeinstellungen (bspw. Kernel-Optionen, Ressourcen-Verteilung, etc.) eine besonders akkurate Vorhersagegenauigkeit erreicht.

Die Figur 2 verdeutlicht den Ablauf (ähnlich dem bisherigen Vorgehen). Die "Klammer" zum Messen und Testen wird über viele oder alle möglichen Kombinationen von Hardware bis Software gelegt (Test-Farm und/oder Systeme im Feld) und die Ergebnisse in der globalen Wissensbasis gespeichert.

Dieses Wissen wird bei Vorliegen einer Nutzer-spezifischen Konfiguration herangezogen, um die Ergebnisse von identischen oder vergleichbaren Konfigurationen heranzuziehen, um eine Unsicherheit zu verringern und damit eine präzise Vorhersage zu treffen. Der trainierte "Algorithmus" des Modells ist dabei einer klassischen Interpolation klar überlegen.

Der wesentliche Unterschied zum Stand der Technik liegt in der Herangehensweise, eine Aussage zum Echtzeit-Verhalten zu treffen. Der bisherige iterative Ansatz bringt die Vorteile eines mehrfach durchlaufenen Tests und der Optimierung hin zum maximal möglichen Ergebnis.

Der Vorteil der neuen Lösung liegt in der flexiblen Anwendbarkeit auf neue Infrastrukturen (z.B. Container- oder Virtualisierungsumgebungen) sowie der direkt möglichen Vorhersage, ohne eine Konfiguration zunächst einem iterativen Test-Prozess unterziehen zu müssen.

Somit ist es auch möglich, auf existierenden Anlagen (brownfield) nachträglich Echtzeit-Anwendungen einzubringen und eine Vorhersage des möglichen Echtzeit-Verhaltens zu treffen. Für den Anwender wird somit ein flexibler Einsatz von Echtzeit und eine deutlich bessere Ressourcennutzung möglich. In der Folge kann eine Automatisierungskomponente geeignet und vor allem in optimierter Weise konfiguriert bzw. programmiert werden. Unterdimensionierung wird zuverlässig verhindert und Überdimensionierung wird dadurch weitestmöglich obsolet.

## Patentansprüche

1. Verfahren zur Konfigurierung und/oder Programmierung einer industriellen Automatisierungskomponente, insbesondere einer industriellen Steuerung oder einer industriellen Kommunikationseinrichtung,
wobei bezüglich der Automatisierungskomponente zumindest eine spezifische Anforderung hinsichtlich der Eigenschaften zur Laufzeit, insbesondere hinsichtlich eines Echtzeit-Verhaltens bei der Ausführung eines industriellen Anwendungsprogramms, vorgegeben wird, wobei für die industrielle Automatisierungskomponente regelmäßig verschiedene mögliche Kombinationen (K1, K2, K3) aus verschiedenen Versionen einer Hardware, eines Betriebssystems und/oder des Anwendungsprogramms verfügbar sind,
**dadurch gekennzeichnet,**
**dass** in einem ersten Schritt für eine Vielzahl der möglichen Kombinationen (K1, K2, K3) aus der Hardware in jeweils unterschiedlicher Version und/oder dem Betriebssystem in jeweils unterschiedlicher Version und/oder dem Anwendungsprogramm in jeweils unterschiedlicher Version jeweils die Eigenschaften zur Laufzeit gemessen (M) und in einer Datenbank (DB) gespeichert werden,
**dass** in einem zweiten Schritt aus den Daten der Datenbank (DB) mittels eines Reinforcement-Lernens ein Modell für die Voraussage der Eigenschaften zur Laufzeit (PRT) erstellt und/oder optimiert (T) wird, wobei eine beim Lernen oder Optimieren (T) des Modells verwendete Belohnungsfunktion des Reinforcement-Lernens auf eine akkurate Voraussage der Eigenschaften gerichtet ist, dass in einem dritten Schritt für eine Anzahl beabsichtigter oder möglicher Kombinationen (USC) anhand des Modells die Eigenschaften zur Laufzeit (PRT) vorausgesagt werden,
**dass** in einem vierten Schritt die Voraussagen (PRT) mit der zumindest einen vorgegebenen Anforderung verglichen werden, und
**dass** in einem fünften Schritt anhand des Vergleichs eine geeignete Kombination (USC) ermittelt und die industrielle Automatisierungskomponente gemäß der ausgewählten Kombination (USC) konfiguriert oder programmiert wird.

2. Verfahren nach Patentanspruch 1,
**dadurch gekennzeichnet,**
**dass** in dem fünften Schritt im Falle mehrerer ermittelter geeigneter Kombinationen eine Auswahl aus diesen Kombinationen anhand eines weiteren Kriteriums erfolgt.

3. Verfahren nach Patentanspruch 2,
**dadurch gekennzeichnet,**
**dass** das weitere Kriterium eine Kosteninformation und/oder eine Verfügbarkeitsinformation zum Zeitpunkt einer geplanten Konfigurierung oder Programmierung ist, wobei die Preisinformationen und/oder Verfügbarkeitsinformationen automatisch aus zumindest einem Warenwirtschaftssystem abgerufen werden.

4. Verfahren nach einem der vorgehenden Patentansprüche, **dadurch gekennzeichnet,**
**dass** in dem ersten Schritt in einer Testanordnung eine Vielzahl von Kombinationen automatisch installiert und ausgeführt werden.

5. Verfahren nach einem der vorgehenden Patentansprüche, **dadurch gekennzeichnet,**
**dass** in dem ersten Schritt die Kombinationen (K1, K2, K3) mit zumindest einer anderen simulierten Automatisierungskomponenten zusammenwirkt, wobei durch diese simulierte Automatisierungskomponente ein geplanter Anwendungsfall für die zu konfigurierende oder zu programmierende Automationskomponente simuliert wird, und wobei für jeden Anwendungsfall oder zumindest für jede Klasse an Anwendungsfällen die Eigenschaften zur Laufzeit separat in der Datenbank gespeichert und in dem Modell separat gelernt wird.

6. Verfahren nach einem der vorgehenden Patentansprüche, **dadurch gekennzeichnet,**
**dass** in dem ersten Schritt für einen Anwendungsfall jeweils beschreibende Meta-Informationen in der Datenbank hinterlegt werden, wobei in dem dritten Schritt zur Voraussage der Eigenschaften zur Laufzeit (PRT) beschreibende Meta-Informationen für einen beabsichtigten Anwendungsfall vorgegeben werden.

7. Anordnung zur Konfigurierung und/oder Programmierung einer industriellen Automatisierungskomponente, insbesondere einer industriellen Steuerung oder einer industriellen Kommunikationseinrichtung,
wobei bezüglich der Automatisierungskomponente zumindest eine spezifische Anforderung hinsichtlich der Eigenschaften zur Laufzeit, insbesondere hinsichtlich eines Echtzeit-Verhaltens bei der Ausführung eines industriellen Anwendungsprogramms, vorgegeben ist, wobei für die industrielle Automatisierungskomponente regelmäßig verschiedene mögliche Kombinationen (K1, K2, K3) aus verschiedenen Versionen einer Hardware, eines Betriebssystems und/oder des Anwendungsprogramms verfügbar sind,
**dadurch gekennzeichnet,**
**dass** zumindest eine Testanordnung vorgesehen und dazu eingerichtet ist, dass für eine Vielzahl der möglichen Kombinationen (K1, K2, K3) aus der Hardware in jeweils unterschiedlicher Version und/oder dem Betriebssystem in jeweils unterschiedlicher Version und/oder dem Anwendungsprogramm in jeweils unterschiedlicher Version jeweils die Eigenschaften zur Laufzeit erfasst und in einer Datenbank gespeichert werden,
**dass** eine Analyseeinrichtung vorgesehen und dazu eingerichtet ist, aus den Daten der Datenbank mittels eines Reinforcement-Lernens (T) ein Modell für die Voraussage der Eigenschaften zur Laufzeit zu erstellen und/oder zu optimieren, wobei eine beim Lernen oder Optimieren des Modells verwendete Belohnungsfunktion des Reinforcement-Lernens auf eine akkurate Voraussage der Eigenschaften gerichtet ist,
**dass** eine Auswahleinrichtung vorgesehen ist zur Voraussage der Eigenschaften zur Laufzeit (PRT) für eine Anzahl beabsichtigter oder möglicher Kombinationen (USC) anhand des Modells,
**dass** die Auswahleinrichtung zum Vergleich der Voraussagen (PRT) mit der zumindest einer vorgegebenen Anforderung eingerichtet ist,
**dass** die Auswahleinrichtung zur Ermittlung einer geeigneten Kombination (USC) anhand des Vergleichs und zur Übertragung von Informationen über die ermittelte Kombination (USC) zu einem Engineeringsystem eingerichtet ist, und
**dass** die Konfigurierung oder Programmierung der industriellen Automatisierungskomponente gemäß der ausgewählten Kombination mittels des Engineeringsystems vorgesehen ist.

8. Anordnung nach Patentanspruch 7,
**dadurch gekennzeichnet,**
**dass** die Auswahleinrichtung im Falle mehrerer ermittelter geeigneter Kombinationen (USC) zur Auswahl einer aus diesen Kombinationen (USC) anhand eines weiteren Kriteriums eingerichtet ist.

9. Anordnung nach Patentanspruch 8,
**dadurch gekennzeichnet,**
**dass** das weitere Kriterium eine Kosteninformation und/oder eine Verfügbarkeitsinformation zum Zeitpunkt einer geplanten Konfigurierung oder Programmierung ist, wobei ein automatischer Abruf der Preisinformationen und/oder Verfügbarkeitsinformationen aus zumindest einem Warenwirtschaftssystem durch die Auswahleinrichtung vorgesehen ist.

10. Anordnung nach einem der Patentansprüche 7 bis 9,
**dadurch gekennzeichnet,**
**dass** eine automatische Installation und Ausführung einer Vielzahl von Kombinationen (K1, K2, K3) in der Testanordnung vorgesehen ist.

11. Anordnung nach einem der Patentansprüche 7 bis 10,
**dadurch gekennzeichnet,**
**dass** in der Testanordnung vorgesehen ist, dass die Kombinationen (K1, K2, K3) mit zumindest einer anderen Automatisierungskomponente zusammenwirken, wobei vorgesehen ist, dass durch diese andere Automatisierungskomponente ein geplanter Anwendungsfall für die zu konfigurierende oder zu programmierende Automationskomponente simuliert wird, und wobei weiter vorgesehen ist, dass für jeden Anwendungsfall oder zumindest für jede Klasse an Anwendungsfällen die Eigenschaften zur Laufzeit separat in der Datenbank gespeichert und in dem Modell separat gelernt werden.

12. Anordnung nach einem der Patentansprüche 7 bis 11,
**dadurch gekennzeichnet,**
**dass** vorgesehen ist, dass für einen getesteten oder simulierten Anwendungsfall jeweils beschreibende Meta-Informationen in der Datenbank (DB) hinterlegt werden, wobei weiter vorgesehen ist, dass zur Voraussage der Eigenschaften zur Laufzeit (PRT) beschreibende Meta-Informationen für einen beabsichtigten Anwendungsfall vorgegeben werden.

13. Computerprogrammprodukt mit einem Computerprogramm, welches bei der Ausführung auf einem Computer zur Durchführung eines der Verfahren gemäß der Patentansprüche 1 - 6 eingerichtet ist.
